# EUROPÄISCHE PATENTSCHRIFT

(11) **EP 1 058 142 B1**
(45) Veröffentlichungstag und Bekanntmachung des Hinweises auf die Patenterteilung: **25.02.2004**
(21) Anmeldenummer: 00107959.9
(22) Anmeldetag: 17.04.2000
(51) Int. Cl.: G02B 26/08, G02B 26/10, G02B 3/00, G02B 17/08, G01B 11/02

(54) **Laserscanner mit kugelförmiger Linse**
Laserscanner with a ball shaped lens
Système de balayage laser comprenant une lentille boule

(30) Priorität: 22.05.1999 DE 19923691
(43) Veröffentlichungstag der Anmeldung: 06.12.2000
(73) Patentinhaber: Volkswagen Aktiengesellschaft, 38436 Wolfsburg (DE)
(72) Erfinder: Schneider, Arthur, Ing., 38112 Braunschweig (DE); Grübel, Andre, 33604 Bielefeld (DE)

(56) Entgegenhaltungen:
- DE-A- 4 130 977
- DE-A- 4 412 044
- SU-A- 1 820 355
- US-A- 2 858 453
- US-A- 3 628 027
- US-A- 4 344 676

## Beschreibung

Die Erfindung betrifft einen Laserscanner mit einer Sendeeinrichtung für ein Laserlichtstrahlenbündel und einer Empfangseinrichtung für ein reflektiertes Laserlichtstrahlenbündel, wobei die Sende- und die Empfangseinrichtung um eine gemeinsame Drehachse rotieren.

Ein derartiger, aus dem Stand der Technik (z.B. DE 44 12 044 A) bekannter Laserscanner ist in Fig. 1 der Zeichnung dargestellt. Dieser bekannte Laserscanner weist zur Abstrahlung des Laserlichts zunächst eine Sendeeinrichtung bestehend aus einer Laserdiode 1, einer Sendelinse 2 und einem Drehspiegel 3 auf. Von dieser Sendeeinrichtung wird ein Laserlichtstrahlenbündel 4 rotierend abgestrahlt. Ein an einem Gegenstand in der Umgebung des Laserscanners reflektiertes Laserlichtstrahlenbündel 5 wird von dem Drehspiegel 3 auf eine Empfangslinse 6 geworfen von der es auf eine Photodiode 7 fokussiert wird. Das Ausgangssignal dieser Photodiode 7 wird anschließend von einer Elektronik ausgewertet, um die gewünschte Information über Gegenstände in der Umgebung des Laserscanners zu gewinnen.

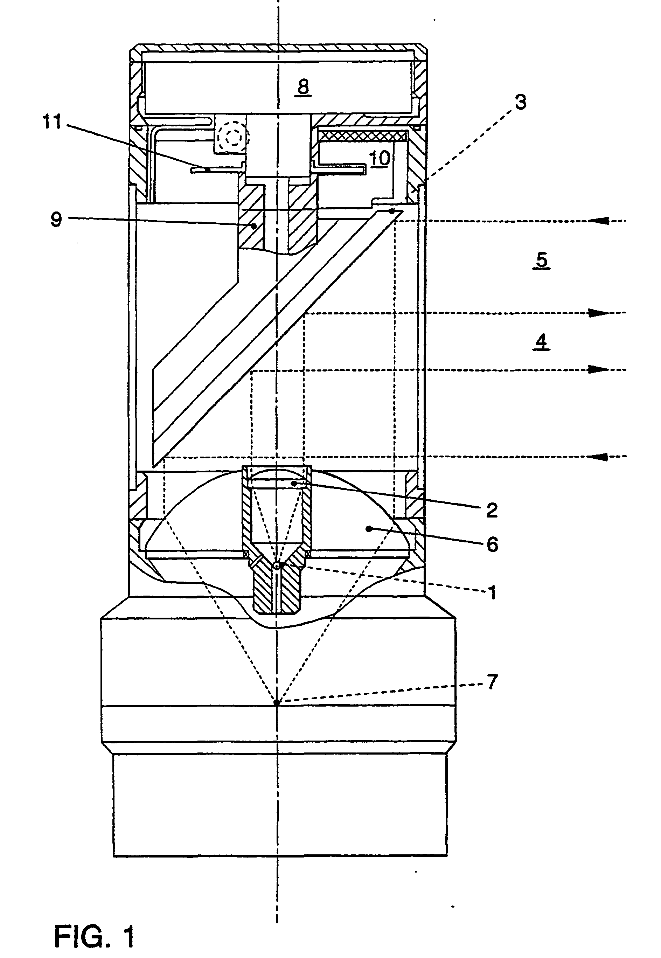

Der Drehspiegel 3 wird bei den bekannten, in Fig. 1 dargestellten Laserscanner von einem Motor 8 oberhalb des Drehspiegels 3 über eine Welle 9 in Rotation versetzt. Die Winkelstellung des Drehspiegels 3 wird dabei von einem Sensor 10 überwacht, der die Stellung eines Coderades 11 detektiert.

Bei diesem bekannten Laserscanner ist zum einen problematisch, daß der Motor 8 oberhalb des Drehspiegels 3 angeordnet werden muß, da die Laserdiode 1 und die Sendelinse 2 in der Verlängerung der Welle 9 angeordnet sind, so daß der Motor 8 nicht unterhalb des Drehspiegels verlängert werden kann. Diese Konstruktionsbeschränkung bedingt die Anordnung elektrischer Bauteile ober- und unterhalb des Drehspiegels, was eine aufwendige Montage verursacht.

Weiter ist bei der Empfangseinrichtung des bekannten Laserscanners problematisch, daß mit der hier verwendeten Empfangslinse 6 eine relativ hohe Brennweite und damit ein verlängerter Bauraum verbunden ist. Dieser Bauraum ist jedoch insbesondere in Kraftfahrzeugen, in denen die beschriebenen Laserscanner zur Abtastung der Umgebung vorwiegend eingesetzt werden, im Hinblick auf eine optimale Integration problematisch.

Ausgehend von dem zuvor beschriebenen Stand der Technik liegt der vorliegenden Erfindung die Aufgabe zugrunde, einen Laserscanner zur Verfügung zu stellen, der eine optimale Gruppierung der elektrischen und elektronischen Bauteile bei gleichzeitig kompakter Bauweise gewährleistet.

Erfindungsgemäß ist die zuvor hergeleitete und aufgezeigte Aufgabe dadurch gelöst, daß die Empfangseinrichtung eine im wesentlichen kugelförmige Linse aufweist, die Drehachse durch den Mittelpunkt der kugelförmigen Linse verläuft und die kugelförmige Linse eine verspiegelte, eine optische Achse senkrecht zur Drehachse aufweisende und im wesentlichen rotationssymmetrische Aufnehmung aufweist. Mit dieser erfindungsgemäßen Ausgestaltung ist gewährleistet, daß die Funktionen des aus dem Stand der Technik bekannten Drehspiegels und der Empfangslinse in einem Bauteil integriert werden können, so daß eine kompakte Bauweise möglich wird.

Gemäß einer ersten Ausgestaltung wird der erfindungsgemäße Laserscanner dadurch weitergebildet, daß die Empfangseinrichtung einen innerhalb der kugelförmigen Linse geführten Empfangslichtwellenleiter aufweist und daß die optische Achse des auf die Ausnehmung gerichteten Empfangslichtwellenleiterendes mit der optischen Achse der Ausnehmung im wesentlichen übereinstimmt. Diese Anordnung eines Empfangslichtwellenleiters und dessen Endes gewährleistet, daß das reflektierte Laserlichtstrahlenbündel optimal in das Empfangslichtwellenleiterende eingespeist werden kann.

Eine aus dem Stand der Technik bekannte separate Sendelinse wird dadurch überflüssig, daß die Sendeeinrichtung einen innerhalb der kugelförmigen Linse geführten Sendelichtwellenleiter aufweist und daß die optische Achse des von der Ausnehmung weggerichteten Sendelichtwellenleiterendes mit der optischen Achse der Ausnehmung im wesentlichen übereinstimmt. Hierdurch wird die Abstrahlung eines Laserlichtstrahlenbündels in Richtung des empfangenen, reflektierten Laserlichtstrahlenbündels gewährleistet.

Eine optimale Auskopplung des reflektierten Laserlichtstrahlenbündels aus der kugelförmigen Linse und eine optimale Einkopplung des ausgesandten Laserlichtstrahlenbündels in die kugelförmige Linse ist dadurch gewährleistet, daß der Empfangslichtwellenleiter und/oder der Sendelichtwellenleiter in der kugelförmigen Linse in Richtung der Drehachse geführt ist und daß der Empfangslichtwellenleiter und/oder Sendelichtwellenleiter durch eine die kugelförmige Linse tragende Welle zu einem feststehenden optischen Sendeund/oder Empfangselement geführt sind. Dadurch, daß ausschließlich Lichtwellenleiter durch die Welle geführt werden, kann sichergestellt werden, daß keine Schleifkontakte zur Herstellung einer elektrischen Verbindung zu der sich drehenden kugelförmigen Linse notwendig sind.

Um die Augensicherheit des erfindungsgemäßen Laserscanners, die insbesondere im Einsatz von Kraftfahrzeugen von hoher Bedeutung ist, zu gewährleisten, ist es vorteilhaft, auf der Oberfläche der kugelförmigen Linse einen Konvexspiegel anzuordnen und die optische Achse des auf das Sendelichtwellenleiterende gerichteten Konvexspiegels mit der optischen Achse des Sendelichtwellenleiterendes im wesentlichen übereinstimmend zu wählen. Hierdurch wird eine Auffächerung des Laserlichtstrahlenbündels auf einen die Augensicherheit gewährleistenden Querschnitt erreicht.

Um das von dem Konvexspiegel ausgehende Laserlichtstrahlenbündel wieder zu parallelisieren, und somit hohe Reichweiten zu gewährleisten, ist in der kugelförmigen Linse gemäß einer weiteren Ausgestaltung ein Hohlspiegel angeordnet, wobei die optische Achse des auf den Konvexspiegel gerichteten Hohlspiegels mit der optischen Achse des Konvexspiegels im wesentlichen übereinstimmt.

Die gewünschte Parallelisierung des von der Sendeeinrichtung ausgestrahlten Laserlichtstrahlenbündels wird besonders vorteilhaft dadurch erreicht, daß der Konvexspiegel und/oder der Hohlspiegel im wesentlichen als Parabolspiegel ausgebildet sind.

Eine optimale Augensicherheit bei gleichzeitig im Hinblick auf eine große Reichweite gewünschter hoher abgestrahlter Lichtstärke läßt sich dadurch sicherstellen, daß das von der Sendeeinrichtung abgestrahlte Laserlichtstrahlenbündel ein vertikal aufgeweitetes Strahlprofil aufweist. Hierzu wird der erfindungsgemäße Laserscanner dadurch weitergebildet, daß der Querschnitt des Hohlspiegels in Drehrichtung deutlich kleiner als senkrecht zur Drehrichtung gewählt wird.

Es gibt nun eine Vielzahl von Möglichkeiten, den erfindungsgemäßen Laserscanner auszugestalten und weiterzubilden. Hierzu wird beispielsweise verwiesen einerseits auf die dem Patentanspruch 1 nachgeordneten Patentansprüche andererseits auf die Beschreibung eines Ausführungsbeispiels des erfindungsgemäßen Laserscanners. In der Zeichnung zeigt
- Fig. 2: eine Seitenansicht eines Ausführungsbeispiels eines erfindungsgemäßen Laserscanners unter Hervorhebung der Empfangseinrichtung,
- Fig. 3: eine Seitenansicht des Ausführungsbeispiels eines erfindungsgemäßen Laserscanners unter Hervorhebung der Sendeeinrichtung und
- Fig. 4: eine Ansicht einer kugelförmigen Linse des Ausführungsbeispiels des erfindungsgemäßen Laserscanners aus der Senderichtung.

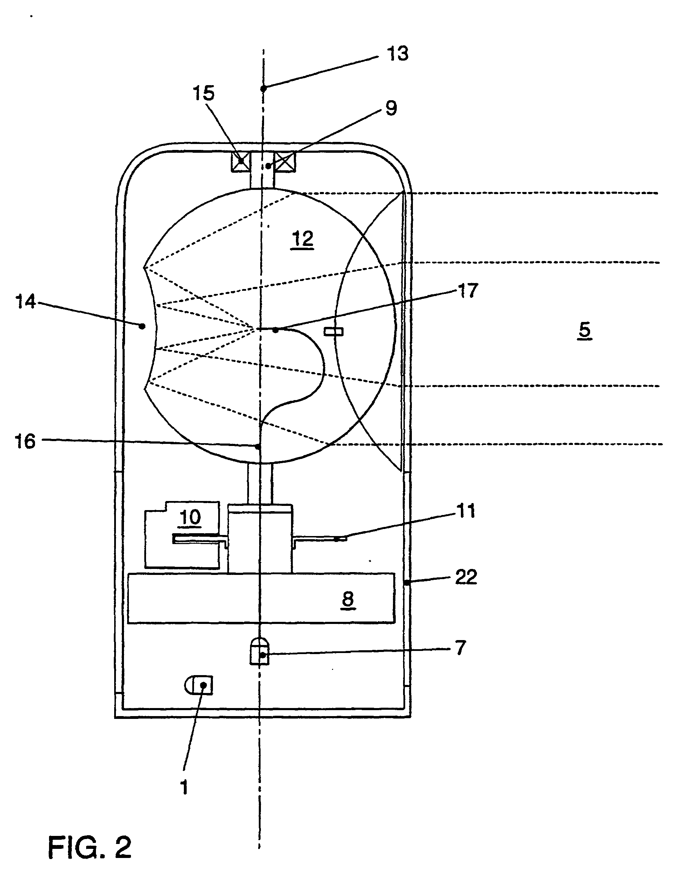

Bei dem in Fig. 2 bis 4 dargestellten Ausführungsbeispiel eines erfindungsgemäßen Laserscanners werden für übereinstimmende Bezugszeichen die bereits aus Fig. 1 bekannten Bezugszeichen verwendet.

Das in Fig. 2 dargestellte Ausführungsbeispiel eines erfindungsgemäßen Laserscanners weist eine im wesentlichen kugelförmige Linse 12 auf, deren Drehachse 13 durch den Mittelpunkt der kugelförmigen Linse 12 verläuft. Die kugelförmige Linse 12 weist eineverspiegelte, eine optische Achse senkrecht zur Drehachse 13 aufweisende und im wesentlichen rotationssymmetrische Ausnehmung 14 auf. Die kugelförmige Linse 12 ist an einer Welle 9 gelagert, die in ihrem oberen Ende in einem Lager 15 gehalten ist und an ihrem unteren Ende von einem Motor 8 angetrieben wird.

Die Empfangseinrichtung des in Fig. 2 dargestellten Ausführungsbeispiels eines erfindungsgemäßen Laserscanners wird durch das Zusammenwirken des in der kugelförmigen Linse 12 geführten Empfangslichtwellenleiters 16 und dessen auf die optische Achse der Ausnehmung 14 ausgerichtetes Empfangslichtwellenleiterendes 17 gebildet. Am Ende des Empfangslichtwellenleiters 16 ist eine Photodiode 7 zur Wandlung des empfangenen, reflektierten Laserlichtstrahlenbündels 5 in ein elektrisches Signal angeordnet. Hierzu wird der Empfangslichtwellenleiter 16 in der kugelförmigen Linse 12 in Richtung der Drehachse geführt und anschließend durch die die kugelförmige Linse 12 tragende Welle 9 zu der feststehenden Photodiode 7 geführt.

Das reflektierte Laserlichtstrahlenbündel 5 wird zunächst von der kugelförmigen Linse 12 auf die einen Konvexspiegel bildende, verspiegelte Ausnehmung 14 gebündelt und von dieser auf das Empfangslichtwellenleiterende 17 fokussiert. Die Anforderung an die optische Qualität der kugelförmigen Linse 12 sind hierbei nicht besonders hoch, da optische Fehler durch ein entsprechendes Profil der Ausnehmung 14 korrigierbar sind. Diese geringen Anforderungen an die optische Qualität der kugelförmigen Linse ermöglichen die Fertigung der kugelförmigen Linse aus Kunststoff oder Glas beispielsweise als Spritzgußteil.

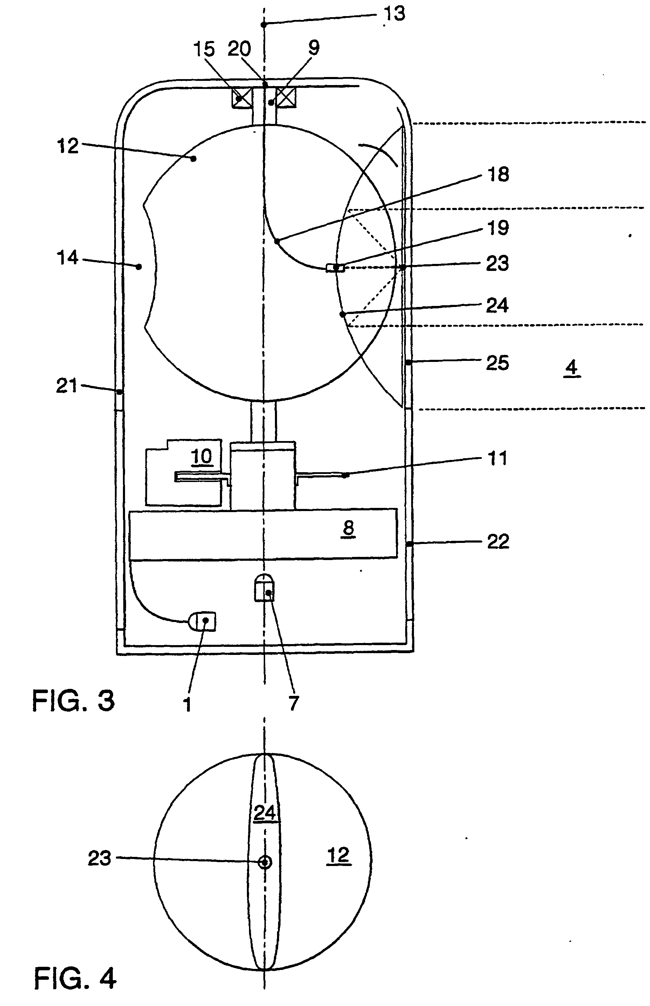

Nachdem in Fig. 2 das Ausführungsbeispiel eines erfindungsgemäßen Laserscanners mit Schwerpunkt auf die Empfangseinrichtung dargestellt ist, ist in Fig. 3 dasselbe Ausführungsbeispiel mit Schwerpunkt auf die Sendeeinrichtung dargestellt. Die Sendeeinrichtung weist gemäß einer Ausgestaltung der Erfindung einen innerhalb der kugelförmigen Linse 12 geführten Sendelichtwellenleiter 18 auf, wobei die optische Achse des von der Ausnehmung 14 weggerichteten Sendelichtwellenleiterendes 19 mit der optischen Achse der Ausnehmung 12 im wesentlichen übereinstimmt. Durch die übereinstimmende Wahl dieser optischen Achsen ist gewährleistet, daß das ausgesendete Laserlichtstrahlenbündel in die Richtung ausgesandt wird, aus der das reflektierte Laserlichtstrahlenbündel von der Empfangseinrichtung empfangen werden kann. Der Sendelichtwellenleiter 18 ist in der kugelförmigen Linse 12 in Richtung der Drehachse 13 geführt und wird durch die Welle 9 zu einer feststehenden Laserdiode 1 weitergeführt. Dabei wird der Empfangslichtwellenleiter 18 am oberen Fußpunkt der Welle 9 unterbrochen und über einen Spiegel 20 mit einem Verbindungslichtwellenleiter 21 mit der Laserdiode 1 verbunden. Dieser Verbindungslichtwellenleiter 21 ermöglicht die Anordnung sämtlicher elektrischer bzw. elektronischer Bauteile des Ausführungsbeispiels des erfindungsgemäßen Laserscanners in einem unteren Bereich eines Gehäuses 22. Zur Gewährleistung einer optimalen Fokussierung des aus dem Sendelichtwellenleiterende 19 austretenden Laserlichtstrahlenbündels ist an diesem Sendelichtwellenleiterende 19 eine selbstfokussierende Linse - auch "Selfoc"-Linse genannt - angeordnet.

Bei dem in Fig. 3 dargestellten Ausführungsbeispiel ist auf der Oberfläche der kugelförmigen Linse 12 ein Konvexspiegel 23 angeordnet, der auf das Sendelichtwellenleiterende 19 ausgerichtet ist und dessen optische Achse mit der optischen Achse des Sendelichtwellenleiterendes 19 übereinstimmt. Weiter ist in der kugelförmigen Linse 12 ein auf den Konvexspiegel 23 ausgerichteter Hohlspiegel 24 angeordnet dessen optische Achse mit der optischen Achse des Konvexspiegels 23 übereinstimmt. Durch das Zusammenspiel von dem Sendelichtwellenleiterende 19, dem Konvexspiegel 23 und dem Hohlspiegel 24 wird ein Sendelaserlichtstrahlenbündel 4 zur Verfügung gestellt, welches die unter dem Gesichtspunkt der Augensicherheit erforderliche Aufweitung bei im wesentlichen parallel abgestrahlten Laserlichtstrahlen gewährleistet.

Der Hohlspiegel 24 kann entweder in die kugelförmige Linse 12 miteingegossen werden oder in einer hierfür vorgesehenen Ausnehmung der kugelförmigen Linse 12 angeordnet werden. Im letzteren Fall wird der Konvexspiegel 23 über separate, nicht dargestellte Träger mit der kugelförmigen Linse 12 verbunden.

Um die Abstrahlung des Laserlichtstrahlenbündels 4 und den Empfang des reflektierten Laserlichtstrahlenbündels 5 ohne Verluste zu gewährleisten, ist das Gehäuse 22 zumindest in dem Bereich 25 für das ausgestrahlte Laserlicht transparent.

Eine optimale Augensicherheit bei gleichzeitig möglichst hoher insgesamt abgestrahlter Lichtstärke und guter vertikaler Auflösung wird dadurch gewährleistet, daß das Laserlichtstrahlenbündel 4 mit einem vertikal aufgeweiteten Strahlprofil ausgesendet wird.

Gleichzeitig ist es bei dem dargestellten Ausführungsbeispiel eines Laserscanners wichtig, daß die Abschattung der Empfangseinrichtung durch den Hohlspiegel 24 möglichst gering ist. Diesen Anforderungen folgend ist der Querschnitt des Hohlspiegels 24, wie in Fig. 4 dargestellt, in Drehrichtung deutlich kleiner als senkrecht zur Drehrichtung ausgeführt.

## Patentansprüche

1. Laserscanner mit einer Sendeeinrichtung für ein Laserlichtstrahlenbündel (4) und einer Empfangseinrichtung für ein reflektiertes Laserlichtstrahlenbündel (5), wobei die Sende- und die Empfangseinrichtung um eine gemeinsame Drehachse (13) rotieren,
**dadurch gekennzeichnet, daß**
die Empfangseinrichtung eine im wesentlichen kugelförmige Linse (12) aufweist, die Drehachse (13) durch den Mittelpunkt der kugelförmigen Linse (12) verläuft und die kugelförmige Linse (12) eine verspiegelte, eine optische Achse senkrecht zur Drehachse (13) aufweisende und im wesentlichen rotationssymmetrische Ausnehmung (14) aufweist.

2. Laserscanner nach Anspruch 1,
**dadurch gekennzeichnet, daß**
die Empangseinrichtung einen innerhalb der kugelförmigen Linse (12) geführten Empfangslichtwellenleiter (16) aufweist und daß die optische Achse des auf die Ausnehmung (14) gerichteten Empfangslichtwellenleiterendes (17) mit der optischen Achse der Ausnehmung (14) im wesentlichen übereinstimmt.

3. Laserscanner nach Anspruch 1 oder 2,
**dadurch gekennzeichnet, daß**
die Sendeeinrichtung einen innerhalb der kugelförmigen Linse (12) geführten Sendelichtwellenleiter (18) aufweist und daß die optische Achse des von der Ausnehmung (14) weggerichteten Sendelichtwellenleiterendes (19) mit der optischen Achse der Ausnehmung (14) im wesentlichen übereinstimmt.

4. Laserscanner nach Anspruch 2 oder 3,
**dadurch gekennzeichnet, daß**
der Empfangslichtwellenleiter (16) und/oder der Sendelichtwellenleiter (18) in der kugelförmigen Linse (12) in Richtung der Drehachse geführt sind und daß der Empfangslichtwellenleiter (16) und/oder der Sendelichtwellenleiter (18) durch eine die kugelförmige Linse (12) tragende Welle (9) zu einem feststehenden optischen Sende- und/oder Empfangselement (1,7) geführt sind.

5. Laserscanner nach Anspruch 3 oder 4,
**dadurch gekennzeichnet, daß**
auf der Oberfläche der kugelförmigen Linse (12) ein Konvexspiegel (23) angeordnet ist und die optische Achse des auf das Sendelichtwellenleiterende (19) gerichteten Konvexspiegels (23) mit der optischen Achse des Sendelichtwellenleiterendes (19) im wesentlichen übereinstimmt.

6. Laserscanner nach Anspruch 5,
**dadurch gekennzeichnet, daß**
in der kugelförmigen Linse (12) ein Hohlspiegel (24) angeordnet ist und die optische Achse des auf den Konvexspiegel (23) gerichteten Hohlspiegels (24) mit der optischen Achse des Konvexspiegels (23) im wesentlichen übereinstimmt.

7. Laserscanner nach Anspruch 5 oder 6,
**dadurch gekennzeichnet, daß**
der Konvexspiegel (23) und/oder der Hohlspiegel (24) im wesentlichen als Parabolspiegel ausgebildet sind.

8. Laserscanner nach Anspruch 6 oder 7,
**dadurch gekennzeichnet, daß**
der Querschnitt des Hohlspiegels (24) in Drehrichtung deutlich kleiner als senkrecht zur Drehrichtung ausgeführt ist.

## Claims

1. Laser scanner having a transmitting device for a laser light beam (4) and having a receiving device for a reflected laser light beam (5), the transmitting device and the receiving device rotating about a common axis (13) of rotation, **characterized in that** the receiving device has a substantially spherical lens (12), the axis (13) of rotation runs through the centre of the spherical lens (12), and the spherical lens (12) has a substantially rotationally symmetrical silvered cutout (14) having an optical axis perpendicular to the axis (13) of rotation.

2. Laser scanner according to Claim 1, **characterized in that** the receiving device has a receiving optical conductor (16) guided inside the spherical lens (12), and **in that** the optical axis of the end (17) of the receiving optical conductor directed towards the cutout (14) substantially corresponds to the optical axis of the cutout (14).

3. Laser scanner according to Claim 1 or 2, **characterized in that** the transmitting device has a transmitting optical conductor (18) guided inside the spherical lens (12), and **in that** the optical axis of the end (19) of the transmitting optical conductor directed away from the cutout (14) substantially corresponds to the optical axis of the cutout (14).

4. Laser scanner according to Claim 2 or 3, **characterized in that** the receiving optical conductor (16) and/or the transmitting optical conductor (18) are/is guided in the spherical lens (12) in the direction of the axis of rotation, and **in that** the receiving optical conductor (16) and/or the transmitting optical conductor (18) are/is guided through a shaft (9) supporting the spherical lens (12) to a fixed optical transmitting and/or receiving element (1, 7).

5. Laser scanner according to Claim 3 or 4, **characterized in that** a convex mirror (23) is arranged on the surface of the spherical lens (12), and the optical axis of the convex mirror (23) directed towards the end (19) of the transmitting optical conductor substantially corresponds to the optical axis of the end (19) of the transmitting optical conductor.

6. Laser scanner according to Claim 5, **characterized in that** a collector mirror (24) is arranged in the spherical lens (12), and the optical axis of the collector mirror (24) directed towards the convex mirror (23) substantially corresponds to the optical axis of the convex mirror (23).

7. Laser scanner according to Claim 5 or 6, **characterized in that** the convex mirror (23) and/or the collector mirror (24) are designed substantially as parabolic mirrors.

8. Laser scanner according to Claim 6 or 7, **characterized in that** the cross section of the collector mirror (24) is designed to be substantially smaller in the direction of rotation than perpendicular to the direction of rotation.

## Revendications

1. Système de balayage laser avec un dispositif d'émission pour un faisceau de rayons lumineux laser (4) et un dispositif de réception pour un faisceau de rayons lumineux laser (5) réfléchi, le dispositif d'émission et de réception tournant autour d'un axe de rotation (13) commun, **caractérisé en ce que** le dispositif de réception comprend une lentille pour l'essentiel en forme de boule (12), que l'axe de rotation (13) passe par le point central de la lentille en forme de boule (12) et que la lentille en forme de boule (12) comprend un creux réfléchissant (14), présentant un axe optique perpendiculaire à l'axe de rotation (13) et pour l'essentiel symétrique en rotation.

2. Système de balayage laser selon la revendication 1, **caractérisé en ce que** le dispositif de réception comprend un conducteur d'ondes lumineuses de réception (16) acheminé à l'intérieur de la lentille en forme de boule (12) et **en ce que** l'axe optique de l'extrémité du conducteur d'ondes lumineuses de réception (17) dirigée vers le creux (14) coïncide pour l'essentiel avec l'axe optique du creux (14).

3. Système de balayage laser selon la revendication 1 ou 2, **caractérisé en ce que** le dispositif d'émission comprend un conducteur d'ondes lumineuses d'émission (18) acheminé à l'intérieur de la lentille en forme de boule (12) et **en ce que** l'axe optique de l'extrémité du conducteur d'ondes lumineuses d'émission (19) dans la direction s'éloignant du creux (14) coïncide pour l'essentiel avec l'axe optique du creux (14).

4. Système de balayage laser selon la revendication 2 ou 3, **caractérisé en ce que** le conducteur d'ondes lumineuses de réception (16) et/ou le conducteur d'ondes lumineuses d'émission (18) sont acheminés dans la lentille en forme de boule (12) en direction de l'axe de rotation et **en ce que** le conducteur d'ondes lumineuses de réception (16) et/ou le conducteur d'ondes lumineuses d'émission (18) sont acheminés à travers un arbre (9) portant la lentille en forme de boule (12) vers un élément optique fixe (1, 7) d'émission et/ou de réception.

5. Système de balayage laser selon la revendication 3 ou 4, **caractérisé en ce qu'**un miroir convexe (23) est disposé sur la surface de la lentille en forme de boule (12) et que l'axe optique du miroir convexe (23) dirigé vers l'extrémité du conducteur d'ondes lumineuses d'émission (19) coïncide pour l'essentiel avec l'axe optique de l'extrémité du conducteur d'ondes lumineuses d'émission (19).

6. Système de balayage laser selon la revendication 5, **caractérisé en ce qu'**un miroir creux (24) est disposé dans la lentille en forme de boule (12) et que l'axe optique du miroir creux (24) dirigé vers le miroir convexe (23) coïncide pour l'essentiel avec l'axe optique du miroir convexe (23).

7. Système de balayage laser selon la revendication 5 ou 6, **caractérisé en ce que** le miroir convexe (23) et/ou le miroir creux (24) sont pour l'essentiel en forme de miroir parabolique.

8. Système de balayage laser selon la revendication 6 ou 7, **caractérisé en ce que** la coupe transversale du miroir creux (24) est réalisée de manière sensiblement plus petite dans la direction de rotation que perpendiculairement à la direction de rotation.
